# EUROPÄISCHE PATENTSCHRIFT

(11) **EP 3 007 914 B1**
(45) Veröffentlichungstag und Bekanntmachung des Hinweises auf die Patenterteilung: **26.07.2017**
(21) Anmeldenummer: 14714265.7
(22) Anmeldetag: 31.03.2014
(51) Int. Cl.: B60C 15/04

(54) **FAHRZEUGLUFTREIFEN MIT EINEM REIFENWULST MIT EINEM KERN UND EINEM KERNPROFIL**
VEHICLE TIRE WITH A BEAD COMPRISING A CORE AND AN APEX
PNEU POUR VEHICULE DOTE D'UN BOURRELET COMPRENANT UNE TRINGLE ET UN BOURRAGE

(30) Priorität: 13.06.2013 DE 102013106149
(43) Veröffentlichungstag der Anmeldung: 20.04.2016
(73) Patentinhaber: Continental Reifen Deutschland GmbH, 30165 Hannover (DE)
(72) Erfinder: FRIES, Volkmar, 30900 Wedemark (DE); MAZUR, Heinz-Bernd, 30900 Wedemark (DE); KRAMER, Thomas, 32049 Herford (DE)
(74) Vertreter: Widjaja, Wira
(86) Internationale Anmeldenummer: PCT/EP2014/056394
(87) Internationale Veröffentlichungsnummer: WO 2014/198434

(56) Entgegenhaltungen:
- EP-A2- 1 055 508
- WO-A1-89/04259
- WO-A1-2008/046430
- US-A- 2 181 475

## Beschreibung

Die Erfindung betrifft einen Fahrzeugluftreifen mit einem Reifenwulst mit einem Kern und einem Kernprofil.
Bei Fahrzeugluftreifen hat der Wulstkern die Aufgabe, einen stabilen Sitz des Reifens auf der Felge sicherzustellen. Für diesen Zweck muss der Wulstkern.eine hohe Umfangssteifigkeit und eine hohe Torsionssteifigkeit besitzen. Der Wulstkern darf jedoch nicht zu biegesteif sein, um eine ausreichende Montierbarkeit und Demontierbarkeit des Reifens in Verbindung mit der Reifenfelge zu ermöglichen. Bei der Montage des Fahrzeugreifens wird der im Umfang kreisrunde Wulstkern elliptisch verformt, um den Reifenwulst über das Felgenhorn zu bringen. Bei herkömmlichen Fahrzeugreifen werden Wulstkerne aus endlos gespulten und gummierten Stahldraht eingesetzt, die eine hohe Umfangs- und Torsionssteifigkeit aufweisen. Ein Problem ist jedoch, dass die Biegesteifigkeit des Wulstkernes ebenfalls sehr hoch ist, so dass bei der Montage und Demontage des Reifens auf die Felge Beschädigungen am Reifenwulst auftreten können.
Die EP 1055 508 A2, US 2181475A, WO 89/04259 A1, WO 2008/046430 A1 offenbaren bekannte Fahrzeugreifen mit entsprechenden Reifenwülsten.

Der Erfindung liegt die Aufgabe zu Grunde, einen Fahrzeugluftreifen zu schaffen, bei dem die Biegesteifigkeit des Reifenwulstes im Hinblick auf die Montage und Demontage des Fahrzeugreifens verbessert wird.

Gelöst wird die Aufgabe gemäß dem Oberbegriff und den kennzeichnenden Merkmalen des Anspruchs 1 dadurch, dass
die Gummierung der einzelnen Stahlcorddrähte im inneren Bereich des Wulstkernes aufgrund eines fehlenden Vulkanisationsmittels im Wesentlichen unvulkanisiert und im Wesentlichen unvernetzt ist,
wodurch die einzelnen Stahlcorddrähte im inneren Bereich des Wulstkernes in Umfangsrichtung gegeneinander beweglich ausgebildet sind und der Reifenwulst insgesamt eine im Vergleich zu herkömmlichen Fahrzeugluftreifen reduzierte Biegesteifigkeit aufweist,
wobei der äußere Randbereich des Wulstkernes durch eine vernetzte Gummimischung mit dem anliegenden Reifenwulstbauteilen verbunden ist.

Ein Vorteil des erfindungsgemäßen Reifenwulstes ist insbesondere darin zu sehen, dass die Biegesteifigkeit des Wulstkernes und des Reifenwulstes gegenüber herkömmlichen Fahrzeugreifen deutlich reduziert wird. Durch diese reduzierte Biegesteifigkeit lässt sich der Fahrzeugreifen einfacher auf die Fahrzeugfelge montieren. Das gleiche gilt für die Demontage des Fahrzeugreifens von der Fahrzeugfelge. Durch die bessere Montagefähigkeit des Fahrzeugreifens wird die Gefahr reduziert, dass der Reifenwulst bei der Montage oder Demontage beschädigt wird. Die reduzierte Biegesteifigkeit ist insbesondere darauf zurückzuführen, dass die einzelnen Stahlcorddrähte im inneren Bereich des Wulstkernes in Umfangsrichtung gegeneinander beweglich ausgebildet sind. Bei der Gummierung der Stahlcorddrähte ist jegliches Vulkanisationsmittel weggelassen worden, so dass die Gummierung auch nach der Reifenvulkanisation des Fahrzeugreifens in einem unvernetzten Zustand verbleibt. Dadurch können sich die Stahlcorddrähte im Inneren des Wulstkernes gegeneinander verschieben, wodurch die deutlich reduzierte Biegesteifigkeit bei der Montage des Fahrzeugreifens auf die Fahrzeugfelge zustande kommt. Der äußere Randbereich des Wulstkernes ist hingegen durch eine vernetzte bzw. vulkanisierte Gummimischung mit den anliegenden Reifenwulstbauteilen fest verbunden. Dadurch wird eine sichere Verbindung des Wulstkernes zu den umliegenden Wulstbauteilen sichergestellt.

In einer vorteilhaften Weiterbildung der Erfindung ist vorgesehen, dass der Gummimischung der Gummierung der Stahlcorddrähte des Wulstkernes ein schnell diffundierender Bestandteil für ein Vernetzungssystem in Form von Schwefel fehlt, wodurch die Gummimischung der Gummierung im Wesentlichen unvernetzt bleibt. Durch das Weglassen des schnell defundierenden Bestandteils für ein Vernetzungssystem wird sichergestellt, dass die Gummierung des Stahlcorddrahtes in einem unvernetzten Zustand bleibt.

In einer weiteren vorteilhaften Weiterbildung der Erfindung ist vorgesehen, dass der Gummimischung der Gummierung der Stahlcorddrähte des Wulstkernes ein zusätzliches Harznetzwerk fehlt.
Das zusätzliche Harznetzwerk ist im Allgemeinen dafür gedacht, die Vulkanisationseigenschaften der Gummierung zu verbessern. Durch Weglassen des zusätzlichen Harznetzwerkes wird sichergestellt, dass sich in der Gummierung keine entsprechende Vernetzung ausbildet. Dadurch wird eine hohe Beweglichkeit der Stahlcorddrähte im inneren Bereich des Wulstkernes sichergestellt.

In einer weiteren vorteilhaften Weiterbildung der Erfindung ist vorgesehen, dass der äußere Randbereich der Gummierung der außen liegenden Stahlcorddrähte des Wulstkernes durch eine erhöhte Konzentration von einem Vernetzungssystem in einem anliegenden Reifenwulstbauteil eine Materialvernetzung aufweist, wodurch der äußere Randbereich des Wulstkernes mit den anliegenden Reifenwulstbauteilen durch eine Materialvernetzung verbunden ist.
Dadurch wird eine sichere Anbindung des Wulstkernes an das anliegende Reifenwulstbauteil gewährleistet. Diese feste Anbindung ist insbesondere dafür notwendig, um eine ausreichende Umfangs- und Torsionssteifigkeit für den Reifenwulst zu erreichen.

In einer weiteren vorteilhaften Weiterbildung der Erfindung ist vorgesehen, dass das am Wulstkern anliegende Reifenwulstbauteil ein Depot für ein Vernetzungssystem ist, wobei das anliegende Reifenwulstbauteil um den Wulstkern herumgeschlagen ist und vor der Reifenvulkanisation eine erhöhte Konzentration von einem Vernetzungssystem aufweist, wobei ein Teil des Vernetzungssystems in die Gummierung der außenliegenden Stahlcorddrähte diffundiert und dort zu eine Materialvernetzung in der Gummierung führt.
Auf diese Weise wird eine sichere Verbindung des Wulstkernverbandes zu den umliegenden Bauteilen sichergestellt. Diese sichere Verbindung gewährleistet eine hohe Umfangs- und Torsionssteifigkeit des Reifenwulstes, die wiederum einen sicheren Sitz des Fahrzeugreifens auf der Fahrzeugfelge gewährleistet.

In einer weiteren vorteilhaften Weiterbildung der Erfindung ist vorgesehen, dass das anliegende Reifenbauteil mit dem Depot für ein Vernetzungssystem eine Kernfahne ist, wobei die Kernfahne um den Wulstkern herumgeschlagen ist und auf beiden Seiten des Kernprofiles anliegt.
Die Kernfahne wird im Allgemeinen bei der Vorkonfektionierung des Wulstkernverbandes aus Wulstkern- und Kernreiter appliziert. Bei der Lagerung des Wulstkernverbandes kann eine ausreichende Menge an Vernetzungssystem in die Gummierung der äußeren Stahlcorddrähte des Wulstkernes eindringen.

In einer weiteren vorteilhaften Weiterbildung der Erfindung ist vorgesehen, dass das anliegende Reifenbauteil mit dem Depot für ein Vernetzungssystem eine zusätzliche Gummischicht ist, wobei die zusätzliche Gummischicht bei einer Vorkonfektionierung des Wulstkernverbundes auf die Kernfahne aufkalandriert wird. Eine entsprechende Gummischicht lässt sich relativ einfach auf der Kernfahne applizieren.

In einer weiteren vorteilhaften Weiterbildung der Erfindung ist vorgesehen, dass der Wulstkern über seinen Umfang mindestens eine Drahtkernklemmung aufweist, wobei die Drahtkernklemmung die geometrische Stabilität des Wulstkernes sicherstellt.

Auf diese Weise wird eine ausreichende Umfangs- und Torsionssteifigkeit des Reifenwulstes gewährleistet.

In einer weiteren vorteilhaften Weiterbildung der Erfindung ist vorgesehen, dass der Wulstkern über seinen Umfang 5 bis 15 einzelne Drahtkernklemmungen aufweist. Bei dieser Anzahl von Drahtklemmungen wird eine optimale geometrische Stabilität des Wulstkernes bzw. Reifenwulstes sichergestellt.

In einer weiteren vorteilhaften Weiterbildung der Erfindung ist vorgesehen, dass die Drahtkernklemmungen jeweils eine Drahtwicklung ohne eine Gummierung sind. Dadurch wird mit den Drahtklemmungen eine bessere Fixierung an dem Wulstkern erzielt.

In einer weiteren vorteilhaften Weiterbildung der Erfindung ist vorgesehen, dass der Fahrzeugluftreifen ein Nutzfahrzeugreifen ist, wobei der Nutzfahrzeugreifen für eine Runderneuerung vorgesehen ist.
Bei diesen Nutzfahrzeugreifen wird der Reifen mehrmals von der Fahrzeugfelge demontiert und wieder auf die Fahrzeugfelge montiert. Daher muss auch bei älteren Fahrzeugreifen eine gute Montierbarkeit gewährleistet werden, wobei der Reifenwulst nicht beschädigt werden darf.

In einer weiteren vorteilhaften Weiterbildung der Erfindung ist vorgesehen, dass der Fahrzeugluftreifen ein Niederquerschnittsreifen für einen PKW-Reifen ist.
Bei Niederquerschnittsreifen für PKW-Reifen muss der Reifenwulst eine reduzierte Biegesteifigkeit besitzen, um eine gute Montierbarkeit des Fahrzeugreifens auf die Felge gewährleisten zu können.

Anhand eines Ausführungsbeispieles soll die Erfindung näher erläutert werden. Es zeigt:

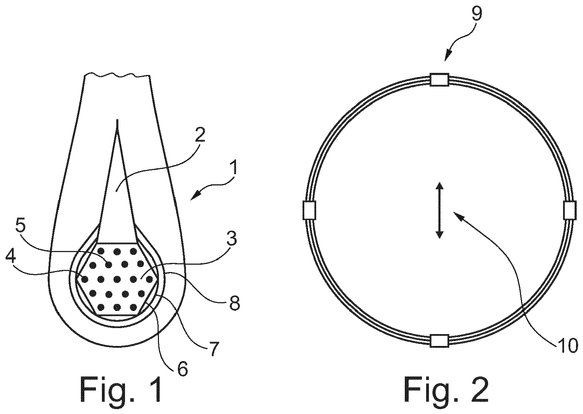

- Fig. 1:: einen Reifenwulst.

Die Figur 1 zeigt schematisch den Reifenwulst 1 des erfindungsgemäßen Fahrzeugluftreifens mit dem Kernprofil 2. Es handelt sich bei dieser Figur um eine Radialschnittansicht des Fahrzeugluftreifens, bei der das Kernprofil 2 und der Kern 3 als Querschnittsprofil dargestellt sind.
Der Wulstkern 3 besteht in der Querschnittsansicht aus einzelnen Stahlcorddrähten 4 und 5. Bei der Vorkonfektionierung des Wulstkernes 3 wird im Allgemeinen ein einzelner Stahlcorddraht in mehreren Windungen aufgewickelt, wobei der Stahlcorddraht mit einer Gummierung versehen ist. Ein besonderes Merkmal vom Wulstkern 3 ist, dass die Gummierung des Stahlcorddrahtes vom Wulstkern 3 keinerlei Vulkanisationsmittel oder ein anderes Vernetzungssystem aufweist. Ein zusätzliches Harznetzwerk wird bei der Gummierung der Stahlcorddrähte ebenfalls weggelassen, wie es ansonsten bei herkömmlichen Fahrzeugreifen der Fall ist. Durch das Weglassen des Vernetzungssystems in der Gummierung der Stahlcorddrähte können sich die inneren Stahlcorddrähte 5 im inneren Bereich des Wulstkernes gegeneinander in Umfangsrichtung des Fahrzeugreifens bewegen. Auf diese Weise wird die Biegesteifigkeit in radialer Richtung des Fahrzeugreifens erheblich reduziert. Der Reifenwulst kann bei der Montage des Fahrzeugreifens leichter in eine elliptische Form gebracht werden, um den Reifenwulst über das Felgenhorn des Fahrzeugreifens zu heben. Der äußere Randbereich 6 des Wulstkerns weist hingegen eine feste Verbindung zu den umliegenden Wulstbauteilen auf. Im äußeren Randbereich 6 des Wulstkernes liegt eine vernetzte bzw. vulkanisierte Gummierung vor, die die Verbindung zu den anliegenden Wulstbauteilen sicherstellt. Um den Wulstkern 3 ist eine Kernfahne 8 herumgeschlagen, die bei der Vorkonfektionierung des Wulstkernverbandes ein Depot für ein Vernetzungssystem besitzt. Die erhöhte Konzentration am Vernetzungssystem in der Kernfahne führt zu einer entsprechenden Diffusion des Vernetzungssystems in die Gummierung der außen liegenden Stahlcorddrähte 4 im äußeren Bereich des Wulstkernes 3. Dadurch bildet sich bei der Reifenvulkanisation eine vernetzte Gummierung im äußeren Bereich des Wulstkernes 3 aus. Bei einem weiteren Ausführungsbeispiel ist auf die Kernfahne 8 eine Gummischicht 7 aufkalandriert. Diese optionale Gummischicht 7 ist bei der Vorkonfektionierung des Wulstkernverbandes mit einem entsprechenden Depot für ein Vernetzungssystem versehen. Das Vernetzungssystem in der Gummischicht diffundiert in die Gummierung der äußeren Stahlcorddrähte 4 im äußeren Bereich des Wulstkernes 3. Auf diese Weise wird eine sichere Anbindung des Wulstkernes 3 zu den anliegenden Wulstbauteilen sichergestellt.

Die Figur 2 zeigt den vorkonfektionierten Wulstkern 3 in einer Seitenansicht. An einzelnen Stellen wird der Wulstkern 3 mit einer Drahtklemmung 9 versehen, um die geometrische Stabilität des Wulstkernes zu verbessern. Der Wulstkern 3 sollte vorzugsweise mit 5 bis 15 Drahtklemmungen versehen werden, die gleichmäßig über den Umfang des Wulstkernes 3 verteilt sein sollten.
Die radiale Richtung 10 zeigt die Richtung in der die Biegesteifigkeit des Wulstkernes durch die neue Wulstkonstruktion wesentlich reduziert wird.

### Bezugszeichenliste

### (ist Teil der Beschreibung)

- 1: Reifenwulst
- 2: Kernprofil
- 3: Kern
- 4: Einzelner Stahlcorddraht im äußeren Bereich des Wulstkernes
- 5: Einzelner Stahlcorddraht im inneren Bereich des Wulstkernes
- 6: Äußerer Randbereich des Wulstkernes
- 7: Optionale auf Kernfahne aufkalandrierte Gummischicht mit Depot für Vernetzungssystem
- 8: Kernfahne mit Depot für Vernetzungssystem
- 9: Drahtklemmung
- 10: Radiale Richtung des Fahrzeugreifens

## Patentansprüche

1. Fahrzeugluftreifen mit einem Laufstreifen, einer Reifenseitenwand und einem Reifenwulst (1) mit einem Wulstkern (3) und einem Kernprofil (2),
wobei das Kernprofil (2) den Wulstkern (3) rotationssymetrisch zur axialen Achse des Fahrzeugluftreifens umschließt und mindestens eine Karkasseinlage um den Wulstkern (3) mit dem Kernprofil (2) herumgeschlagen ist,
wobei der Wulstkern (3) im Querschnitt eine Vielzahl von Stahlcorddrähten (4, 5) aufweist und die Stahlcorddrähte (4, 5) jeweils eine äußere Gummierung aufweisen,
**dadurch gekennzeichnet, dass**
die Gummierung der einzelnen Stahlcorddrähte (5) im inneren Bereich des Wulstkernes (3) aufgrund eines fehlenden Vulkanisationsmittels im Wesentlichen unvulkanisiert und im Wesentlichen unvernetzt ist,
wodurch die einzelnen Stahlcorddrähte (5) im inneren Bereich des Wulstkernes (3) in Umfangsrichtung gegeneinander beweglich ausgebildet sind und der Reifenwulst (1) insgesamt eine im Vergleich zu herkömmlichen Fahrzeugluftreifen reduzierte Biegesteifigkeit aufweist,
wobei der äußere Randbereich (6) des Wulstkernes (3) durch eine vernetzte Gummimischung mit dem anliegenden Reifenwulstbauteilen verbunden ist.

2. Fahrzeugluftreifen nach Anspruch 1,
**dadurch gekennzeichnet, dass**
der Gummimischung der Gummierung der Stahlcorddrähte (4, 5) des Wulstkernes (3) ein schnell diffundierender Bestandteil für eine Vernetzungssystem in Form von Schwefel fehlt, wodurch die Gummimischung der Gummierung im Wesentlichen unvernetzt bleibt.

3. Fahrzeugluftreifen nach einem der vorhergehenden Ansprüche,
**dadurch gekennzeichnet, dass**
der Gummimischung der Gummierung der Stahlcorddrähte (4, 5) des Wulstkernes ein zusätzliches Harznetzwerk fehlt.

4. Fahrzeugluftreifen nach einem der vorhergehenden Ansprüche,
**dadurch gekennzeichnet, dass**
der äußere Randbereich der Gummierung der außen liegenden Stahlcorddrähte (4) des Wulstkernes (3) durch eine erhöhte Konzentration von einem Vernetzungssystem in einem anliegenden Reifenwulstbauteil eine Materialvernetzung aufweist, wodurch der äußere Randbereich (6) des Wulstkernes (3) mit den anliegenden Reifenwulstbauteilen durch eine Materialvernetzung verbunden ist.

5. Fahrzeugluftreifen nach einem der vorhergehenden Ansprüche,
**dadurch gekennzeichnet, dass**
das am Wulstkern (3) anliegende Reifenwulstbauteil ein Depot für ein Vernetzungssystem ist,
wobei das anliegende Reifenwulstbauteil um den Wulstkern herumgeschlagen ist und vor der Reifenvulkanisation eine erhöhte Konzentration von einem Vernetzungssystem aufweist,
wobei ein Teil des Vernetzungssystems in die Gummierung der außenliegenden Stahlcorddrähte (4) diffundiert und dort zu eine Materialvernetzung in der Gummierung führt.

6. Fahrzeugluftreifen nach Anspruch 6,
**dadurch gekennzeichnet, dass**
das anliegende Reifenbauteil mit dem Depot für ein Vernetzungssystem eine Kernfahne (8) ist,
wobei die Kernfahne (8) um den Wulstkern (3) herumgeschlagen ist und auf beiden Seiten des Kernprofiles (2) anliegt.

7. Fahrzeugluftreifen nach Anspruch 6,
**dadurch gekennzeichnet, dass**
das anliegende Reifenbauteil mit dem Depot für ein Vernetzungssystem eine zusätzliche Gummischicht (7) ist,
wobei die zusätzliche Gummischicht (7) bei einer Vorkonfektionierung des Wulstkernverbundes auf die Kernfahne (8) aufkalandriert wird.

8. Fahrzeugluftreifen nach einem der vorhergehenden Ansprüche,
**dadurch gekennzeichnet, dass**
der Wulstkern (3) über seinen Umfang mindestens eine Drahtkernklemmung (9) aufweist, wobei die Drahtkernklemmung (9) die geometrische Stabilität des Wulstkernes (3) sicherstellt.

9. Fahrzeugluftreifen nach einem der vorhergehenden Ansprüche,
**dadurch gekennzeichnet, dass**
der Wulstkern über seinen Umfang 5 bis 15 einzelne Drahtkernklemmungen (9) aufweist.

10. Fahrzeugluftreifen nach Anspruch 8 und 9,
**dadurch gekennzeichnet, dass**
die Drahtkernklemmungen (9) jeweils eine Drahtwicklung ohne eine Gummierung sind.

11. Fahrzeugluftreifen nach einem der vorhergehenden Ansprüche,
**dadurch gekennzeichnet, dass**
der Fahrzeugluftreifen ein Nutzfahrzeugreifen ist,
wobei der Nutzfahrzeugreifen für eine Runderneuerung vorgesehen ist.

12. Fahrzeugluftreifen nach einem der vorhergehenden Ansprüche,
**dadurch gekennzeichnet, dass**
der Fahrzeugluftreifen ein Niederquerschnittsreifen für einen PKW-Reifen ist.

## Claims

1. Pneumatic vehicle tyre having a tread, a tyre sidewall and a tyre bead (1) with a bead core (3) and a core profile (2),
wherein the core profile (2) encloses the bead core (3) rotationally symmetrically to the axial axis of the pneumatic vehicle tyre and at least one carcass inlay is wrapped around the bead core (3) with the core profile (2),
wherein the bead core (3) has in cross section a multiplicity of steel cord wires (4, 5) and the steel cord wires (4, 5) each have an outer rubber coating,
**characterized in that**
the rubber coating of the individual steel cord wires (5) in the inner region of the bead core (3) is substantially unvulcanized and substantially uncrosslinked owing to a lack of vulcanizing agent,
with the result that the individual steel cord wires (5) in the inner region of the bead core (3) are designed to be movable with respect to one another in the circumferential direction and the tyre bead (1) has overall a reduced bending stiffness by comparison with conventional pneumatic vehicle tyres,
wherein the outer edge region (6) of the bead core (3) is connected to the adjoining tyre bead components by a crosslinked rubber mixture.

2. Pneumatic vehicle tyre according to Claim 1,
**characterized in that**
the rubber mixture of the rubber coating of the steel cord wires (4, 5) of the bead core (3) lacks a rapidly diffusing constituent for a crosslinking system in the form of sulphur, with the result that the rubber mixture of the rubber coating remains substantially uncrosslinked.

3. Pneumatic vehicle tyre according to one of the preceding claims,
**characterized in that**
the rubber mixture of the rubber coating of the steel cord wires (4, 5) of the bead core lacks an additional resin network.

4. Pneumatic vehicle tyre according to one of the preceding claims,
**characterized in that**
the outer edge region of the rubber coating of the external steel cord wires (4) of the bead core (3) exhibits a material crosslinking owing to an increased concentration of a crosslinking system in an adjoining tyre bead component, with the result that the outer edge region (6) of the bead core (3) is connected to the adjoining tyre bead components by a material crosslinking.

5. Pneumatic vehicle tyre according to one of the preceding claims,
**characterized in that**
the tyre bead component adjoining the bead core (3) is a depot for a crosslinking system,
wherein the adjoining tyre bead component is wrapped around the bead core and has an increased concentration of a crosslinking system prior to the tyre vulcanization,
wherein part of the crosslinking system diffuses into the rubber coating of the external steel cord wires (4) and leads at that point to a material crosslinking in the rubber coating.

6. Pneumatic vehicle tyre according to Claim 5,
**characterized in that**
the adjoining tyre component with the depot for a crosslinking system is a flipper strip (8), wherein the flipper strip (8) is wrapped around the bead core (3) and bears on both sides of the core profile (2).

7. Pneumatic vehicle tyre according to Claim 6,
**characterized in that**
the adjoining tyre component with the depot for a crosslinking system is an additional rubber layer (7),
wherein the additional rubber layer (7) is calendered onto the flipper strip (8) during a prefabrication of the bead core assembly.

8. Pneumatic vehicle tyre according to one of the preceding claims,
**characterized in that**
the bead core (3) has at least one wire core clamp (9) over its circumference, wherein the wire core clamp (9) ensures the geometric stability of the bead core (3).

9. Pneumatic vehicle tyre according to one of the preceding claims,
**characterized in that**
the bead core has from 5 to 15 individual wire core clamps (9) over its circumference.

10. Pneumatic vehicle tyre according to Claims 8 and 9,
**characterized in that**
the wire core clamps (9) are each a wire winding without a rubber coating.

11. Pneumatic vehicle tyre according to one of the preceding claims,
**characterized in that**
the pneumatic vehicle tyre is a commercial vehicle tyre,
wherein the commercial vehicle tyre is intended for retreading.

12. Pneumatic vehicle tyre according to one of the preceding claims,
**characterized in that**
the pneumatic vehicle tyre is a low cross section tyre for a passenger car tyre.

## Revendications

1. Pneu pour véhicule doté d'une bande de roulement, d'un flanc de pneu et d'un talon de pneu (1) avec une tringle (3) et un bourrage (2), dans lequel le bourrage (2) entoure la tringle (3) de façon symétrique en rotation par rapport à l'axe axial du pneu de véhicule et au moins une nappe de carcasse est enroulée autour de la tringle (3) avec le bourrage (2), dans lequel la tringle (3) présente en section transversale une multiplicité de cordes d'acier (4, 5) et les cordes d'acier (4, 5) présentent chacune un caoutchoutage extérieur,
**caractérisé en ce que** le caoutchoutage des cordes d'acier individuelles (5) n'est essentiellement pas vulcanisé et essentiellement pas réticulé dans la région intérieure de la tringle (3) à cause d'un manque d'agent de vulcanisation, les cordes d'acier individuelles (5) sont de ce fait réalisées de façon mobile l'une par rapport à l'autre en direction périphérique dans la région intérieure de la tringle (3) et le talon de pneu (1) présente globalement une rigidité à la flexion réduite par comparaison avec des pneus pour véhicule conventionnels, dans lequel la région de bord extérieure (6) de la tringle (3) est assemblée aux parties de talon de pneu voisines au moyen d'un mélange de gommes réticulé.

2. Pneu pour véhicule selon la revendication 1, **caractérisé en ce qu'**il manque au mélange de gommes du caoutchoutage des cordes d'acier (4, 5) de la tringle (3) un composant à diffusion rapide pour un système de réticulation sous la forme de soufre, et c'est pourquoi le mélange de gommes du caoutchoutage reste essentiellement non réticulé.

3. Pneu pour véhicule selon l'une quelconque des revendications précédentes, **caractérisé en ce qu'**il manque au mélange de gommes du caoutchoutage des cordes d'acier (4, 5) de la tringle un réseau de résine additionnel.

4. Pneu pour véhicule selon l'une quelconque des revendications précédentes, **caractérisé en ce que** la région de bord extérieure du caoutchoutage de cordes d'acier situées à l'extérieur (4) de la tringle (3) présente une réticulation de la matière due à une concentration accrue d'un système de réticulation dans un composant de talon voisin, par laquelle la région de bord extérieure (6) de la tringle (3) est assemblée aux composants de talon voisins par une réticulation de la matière.

5. Pneu pour véhicule selon l'une quelconque des revendications précédentes, **caractérisé en ce qu'**un composant de talon voisin de la tringle (3) est un dépôt pour un système de réticulation, dans lequel le composant de talon voisin est enroulé autour de la tringle et présente avant la vulcanisation du pneu une concentration accrue d'un système de réticulation, dans lequel une partie du système de réticulation diffuse dans le caoutchoutage des cordes d'acier situées à l'extérieur (4) et y conduit à une réticulation de la matière dans le caoutchoutage.

6. Pneu pour véhicule selon la revendication 5, **caractérisé en ce que** le composant de pneu voisin avec le dépôt pour un système de réticulation est une enveloppe de tringle (8), dans lequel l'enveloppe de tringle (8) est enroulée autour de la tringle (3) et s'applique sur les deux côtés du bourrage (2).

7. Pneu pour véhicule selon la revendication 6, **caractérisé en ce que** le composant de pneu voisin avec le dépôt pour un système de réticulation est une couche de caoutchouc supplémentaire (7), dans lequel la couche de caoutchouc supplémentaire (7) est calandrée sur l'enveloppe de tringle (8) lors d'une pré-confection de la tringle de talon composite.

8. Pneu pour véhicule selon l'une quelconque des revendications précédentes, **caractérisé en ce que** la tringle (3) présente sur sa périphérie au moins une attache de la tringle de fils (9), dans lequel l'attache de la tringle de fils (9) assure la stabilité géométrique de la tringle (3).

9. Pneu pour véhicule selon l'une quelconque des revendications précédentes, **caractérisé en ce que** la tringle présente sur sa périphérie 5 à 15 attaches de la tringle de fils (9).

10. Pneu pour véhicule selon une revendication 8 et 9, **caractérisé en ce que** les attaches de la tringle de fils (9) sont respectivement une spire de fil sans caoutchoutage.

11. Pneu pour véhicule selon l'une quelconque des revendications précédentes, **caractérisé en ce que** le pneu pour véhicule est un pneu pour véhicule utilitaire, dans lequel le pneu pour véhicule utilitaire est prévu pour un rechapage.

12. Pneu pour véhicule selon l'une quelconque des revendications précédentes, **caractérisé en ce que** le pneu pour véhicule est un pneu à faible section transversale destiné à un pneu pour une voiture.
